# EUROPÄISCHE PATENTSCHRIFT

(11) **EP 0 536 557 B1**
(45) Veröffentlichungstag und Bekanntmachung des Hinweises auf die Patenterteilung: **06.12.1995**
(21) Anmeldenummer: 92115631.1
(22) Anmeldetag: 12.09.1992
(51) Int. Cl.: F02D 41/26, F02D 41/22, G05B 9/03

(54) **Vorrichtung zur Steuerung der Antriebsleistung eines Fahrzeugs**
Apparatus for controlling the ouput power of a motor vehicle
Dispositif pour commander la puissance motrice d'un véhicule

(30) Priorität: 08.10.1991 DE 4133268
(43) Veröffentlichungstag der Anmeldung: 14.04.1993
(73) Patentinhaber: ROBERT BOSCH GMBH, 70442 Stuttgart (DE)
(72) Erfinder: Goelzer, Thomas, Dr., W-7141 Schwieberdingen (DE); Streib, Martin, Dr., W-7143 Vaihingen/Enz 6 (DE)

(56) Entgegenhaltungen:
- DE-A- 3 539 407
- DE-A- 3 821 286
- DE-A- 4 004 086
- GB-A- 2 173 611
- GB-A- 2 191 875
- XXIII FISITA; 5/1990 TURIN, Vortrag 90 5005

## Beschreibung

### Stand der Technik

Die Erfindung betrifft eine Vorrichtung zur Steuerung der Antriebsleistung eines Fahrzeugs.

Zur Erhöhung von Betriebssicherheit und Verfügbarkeit eines Fahrzeugs werden sicherheitskritische elektronische Systeme in Fahrzeugen immer mehr mit redundanten Bauelementen, z.B. Sensoren und/oder Rechenelementen ausgestattet.

So ist beispielsweise aus der DE-OS 35 39 407 ein Steuersystem für ein Fahrzeug mit zwei Prozessoren bekannt. Ferner sind bei diesem bekannten System Meßeinrichtungen wie z.B. der Stellungsgeber eines vom Fahrer betätigbaren Bedienelements oder der Drehzahlgeber redundant ausgelegt. Die Signale der redundant ausgelegten Meßeinrichtungen werden jeweils den beiden Prozessoren zugeführt, die auf der Basis eines nahezu identischen Rechnerprogramms die Steuerung der Antriebsleistung des Fahrzeugs durchführen. Dabei greifen die Ausgangssignale beider Prozessoren auf dieselbe veränderliche, leistungsbeeinflussende Größe der Antriebseinheit des Fahrzeugs zu.

Die vollständige Redundanz eines derartigen Systems trägt jedoch zu beträchtlichem Mehraufwand und somit zu erhöhten Kosten und auch zu erhöhter Fehlerhäufigkeit bei.

Es ist daher Aufgabe der Erfindung, eine Vorrichtung zur Steuerung der Antriebsleistung eines Fahrzeugs anzugeben, welche eine redundante Auslegung sicherheitskritischer Bauelemente ermöglicht, ohne zu einem Mehraufwand und zu erhöhten Kosten zu führen.

Dies wird dadurch erreicht, daß bei einer aus wenigstens zwei redundanten Sensoren bestehende Meßeinrichtung das Ausgangssignal eines Sensors einer ersten Steuereinheit, die wenigstens eine erste veränderliche Größe der Antriebseinheit steuert, zugeführt wird, während das Ausgangssignal eines anderen Sensors der Meßeinrichtung einer zweiten, wenigstens eine weitere veränderbare Größe der Antriebseinheit steuernden Steuereinheit zugeführt ist.

Es ist bekannt, daß heutige Fahrzeuge zum Teil mit einer Vielzahl elektronischer Steuereinheiten ausgerüstet sind. Zu erwähnen ist hierbei insbesondere eine Steuereinheit zur Benzineinspritzung, zur Zündung, eine elektronische Motorleistungssteuerung, eine elektronische Getriebesteuereinheit, eine ABS-/ASR-Steuereinheit sowie ein Fahrgeschwindigkeitsregler. Diese Steuereinheiten greifen jeweils auf andere veränderliche Größen einer Antriebseinheit eines Fahrzeugs zu.

In modernen Fahrzeugen sind diese Steuereinheiten durch ein elektronisches Leitungssystem (CAN-Bus) miteinander verbunden und tauschen über dieses untereinander Daten und Informationen aus. (Siehe Vortrag 905005, XXIII FiSiTA, 5/1990, TURIN)

Die GB-A 2 191 875 beschreibt ein Steuersystem mit einer Haupt- und einer Notsteuereinheit zur Motor- und Getriebesteuerung, wobei jeder Steuereinheit jeweils ein Sensorsignal eines redundanten Stellungsgebers für ein Fahrpedal zugeführt ist. Im Fehlerfall der Hauptsteuereinheit übernimmt die Notsteuereinheit die Steuerungsfunktion. Die Steuereinheiten sind daher zumindest bezüglich ihres Funktionsumfangs redundant aufgebaut. Überwachungsmaßnahmen bezüglich der Stellungssignale werden nicht beschrieben.

Die GB-A 2 173 611 zeigt ein Motorsteuersystem zur Steuerung von Kraftstoffzumessung und Zündung. Um die Rechenbelastung einer einzelnen Recheneinheit, welche beide Funktionen durchführt, insbesondere bei hohen Drehzahlen zu verringern und somit die Motorsteuerung präziser zu machen, ist vorgesehen, die Funktionen der Kraftstoffzumessung und der Zündungseinstellung auf zwei Steuereinheiten aufzuteilen. Die Signale redundanter Drehzahlsensoren sind einer Steuereinheit zugeführt, die die Auswertung und Verarbeitung der Signale auch für die zweite Steuereinheit übernimmt, so daß auch hier die Sicherstellung der Betriebssicherheit nur mit einem erhöhtem Aufwand in der die Signale verarbeitenden Steuereinheit möglich wäre.

Aus der DE-OS 35 10 173 (= US-PS 4 603 675) ist im Zusammenhang mit Stellungsgebern von Fahrpedalen bekannt, durch Plausibilität der Signalwerte der beiden redundanten Stellungsgeber einen Fehlerzustand im Bereich des Fahrpedals, der Meßeinrichtungen oder der Zuleitungen zu erkennen. Ferner ist bekannt, aus einem Plausibilitätsvergleich zwischen Fahrpedalstellung und Drosselklappenstellung einen Fehlerzustand des elektronischen Motorleistungssystems abzuleiten.

Aus der EP-A 289 766 sind Maßnahmen zur Bestimmung von Ableit- bzw. Übergangswiderständen bei Potentiometern bekannt.

### Vorteile der Erfindung

Die erfindungsgemäße Vorgehensweise hat den Vorteil, daß bereits vorhandene Elemente zur Auswertung und Fehlerüberwachung redundant ausgelegter Meßeinrichtungen verwendet werden können. Dadurch wird der in der Regel benötigte Mehraufwand und die daraus resultierenden Mehrkosten im Zusammenhang mit redundanten Systemen bzw. Teilsystemen vermieden.

Besonders vorteilhaft ist ferner, daß mittels der erfindungsgemäßen Vorgehensweise die Fehlerüberwachung weiter verfeinert werden kann, wodurch Betriebssicherheit und Verfügbarkeit des Fahrzeugs ansteigt.

Weitere Vorteile ergeben sich aus der nachfolgenden Beschreibung von Ausführungsbeispielen und aus den Unteransprüchen.

### Zeichnung

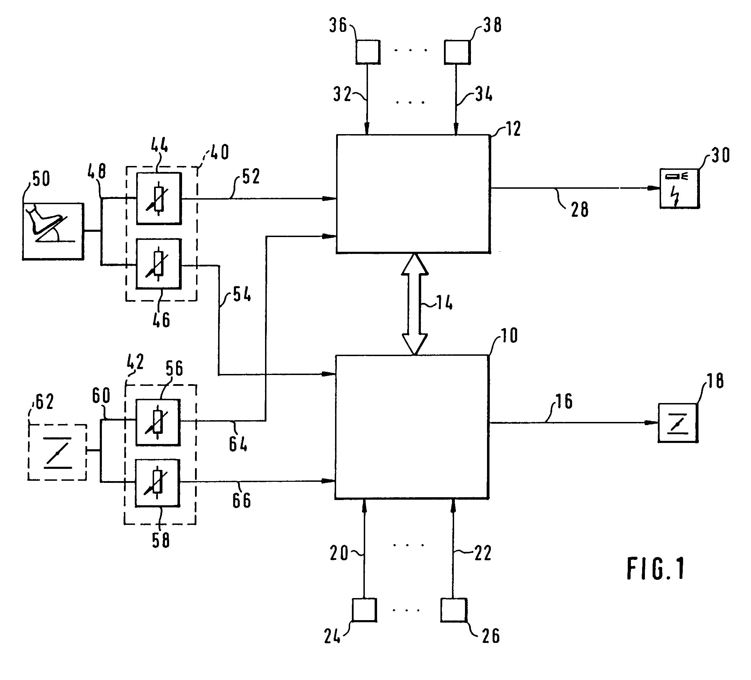

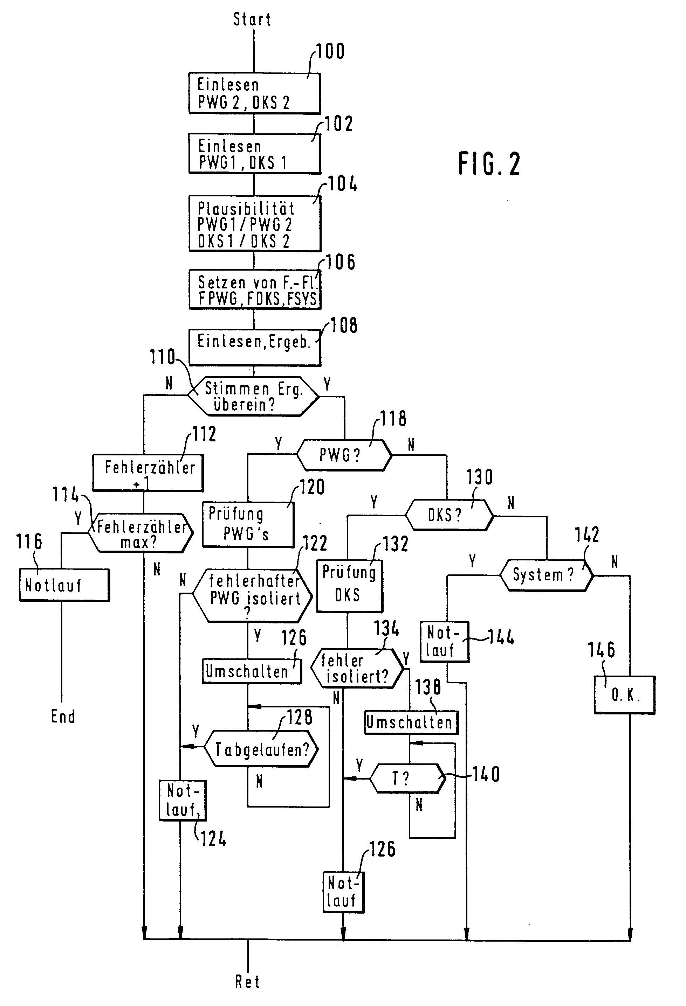

Die Erfindung wird nachstehend anhand der in der Zeichnung dargestellten Ausführungsformen erläutert. Dabei zeigt Figur 1 ein schematisches Blockschaltbild einer Vorrichtung zur Steuerung der Antriebsleistung eines Fahrzeugs, während in Figur 2 ein in einer der Steuereinheiten ablaufendes Programm zur Überwachung des Systems in Form eines Flußdiagramms skizziert ist.

### Beschreibung von Ausführungsbeispielen

Figur 1 zeigt eine Vorrichtung zur Steuerung der Antriebsleistung eines Fahrzeugs am Beispiel eines Steuersystems für ein mit einer Brennkraftmaschine ausgerüstetes Kraftfahrzeug. Dabei ist eine erste Steuereinheit 10 vorgesehen, welche eine erste veränderliche Größe zur Beeinflussung der Antriebsleistung des Fahrzeugs steuert.

Ferner ist eine zweite Steuereinheit 12 vorgesehen, welche wenigstens eine zweite veränderliche Größe zur Beeinflussung der Antriebsleistung des Fahrzeugs steuert.

Im dargestellten Ausführungsbeispiel betrifft die Steuereinheit 10 ein elektronisches Motorleistungssteuersystem zur Steuerung einer Drosselklappe, während die Steuereinheit 12 eine Steuereinheit für Kraftstoffzumessung, eventuell ergänzt mit einer Zündungssteuerung, darstellt.

In anderen Ausführungsbeispielen kann es sich jedoch auch bei der Steuereinheit 10 um eine, zumindest die Kraftstoffzumessung beeinflussende Steuereinheit handeln, während die Steuereinheit 12 eine elektronische Getriebesteuereinheit oder eine ABS/ASR-Steuereinheit sein kann.

Die Steuereinheiten 10 und 12 sind über ein Bussystem 14 zu Kommunikationszwecken verbunden. Die Steuereinheit 10 verfügt über eine Ausgangsleitung 16, welche die Steuereinheit 10 mit einer Stelleinrichtung 18 zur Steuerung eines leistungsbestimmenden Elements, wie eine Drosselklappe oder eine Einspritzpumpe einer nicht dargestellten Brennkraftmaschine, verbindet. Über die Eingangsleitungen 20 bis 22 wird die Steuereinheit 10 mit Betriebsgrößen des Motors und/oder des Fahrzeugs, welche von Meßeinrichtungen 24 bis 26 erfaßt werden, versorgt. In analoger Weise verfügt die Steuereinheit 12 über eine Ausgangsleitung 28, welche diese mit einer Stelleinrichtung 30 zur Einstellung der Kraftstoffzumessung und/oder der Zündung verbindet. Eingangsleitungen 32 bis 34 führen der Steuereinheit 12 Betriebsgrößen des Motors und/oder des Fahrzeugs, welche von Meßeinrichtungen 36 bis 38 erfaßt werden, zu.

Ferner umfaßt die in Figur 1 dargestellte Vorrichtung wenigstens eine der Meßeinrichtungen 40 bzw. 42. Diese Meßeinrichtungen sind aus zumindest teilweise, d.h. in vorgegebenen Betriebsbereichen, redundanten Sensoren aufgebaut. In einem vorteilhaften Ausführungsbeispiel handelt es sich dabei um mit einem vom Fahrer betätigbaren Bedienelement 50 und/oder mit einem leistungsbestimmenden Element 62 verbundene Stellungsgeber. Dabei können die leistungsbestimmenden Elemente 18 und 62 identisch sein.

Die Meßeinrichtung 40 umfaßt die Stellungssensoren 44 und 46, die je nach Ausführungsbeispiel als Potentiometer, berührungslose Stellungsgeber und/oder Schaltfunktionen ausgeführt sind. Über eine mechanische Verbindung 48 ist die Meßeinrichtung 40 mit einem vom Fahrer betätigbaren Bedienelement 50, insbesondere einem Fahrpedal, verbunden. Die Ausgangssignalleitung 52 des Sensors 44 ist auf die Steuereinheit 12 geführt, während die Ausgangsleitung 54 des Sensors 46 auf die Steuereinheit 10 geführt ist.

In analoger Weise umfaßt die Meßeinrichtung 42 die Sensoren 56 und 58. Dabei ist die Meßeinrichtung 42 über eine mechanische Verbindung 60 mit einem leistungsbestimmenden Element 62, einer Drosselklappe oder einer Einspritzpumpe, verbunden. Die Ausgangsleitung 64 des Sensors 56 verbindet die Meßeinrichtung 42 mit der Steuereinheit 12, während die Ausgangsleitung 66 des Sensors 58 die Meßeinrichtung 42 mit der Steuereinheit 10 verbindet.

In einem anderen vorteilhaften Ausführungsbeispiel kann es sich bei den Sensoren auch um Drucksensoren, Drehzahlsensoren, Raddrehzahlsensoren, Temperatursensoren, Lastsensoren etc. handeln.

Insbesondere eignet sich die erfindungsgemäße Vorgehensweise auch zur Anwendung in Verbindung mit alternativen Antriebssystemen, wie Elektroantrieben, etc.

Die Funktionsweise der beschriebenen Vorrichtung wird im folgenden anhand einer elektronischen Motorleistungssteuerung und einem Benzineinspritzsystem erläutert.

Die Steuereinheit 10, das elektronische Motorleistungssteuersystem, bildet sich auf der Basis der über die Leitung 54 zugeführten Stellung des Bedienelements sowie ggf. unter Berücksichtigung der über die Leitungen 20 bis 22 zugeführten Betriebsgrößen, wie Fahrgeschwindigkeit, Raddrehzahlen, Gangstellung, Motordrehzahl, etc., einen Sollwert für die Stellung des leistungsbestimmenden Elements 18. Dieser Sollwert wird mit dem über die Leitung 66 zugeführten Istwert der Stellung des leistungsbestimmenden Stellelements verglichen und über eine Reglergleichung ein Ansteuersignal zur Einstellung des Stellelements 18 erzeugt. Dieses Ansteuersignal wird über die Leitung 16 an das Stellelement 18 übertragen, welches das leistungsbestimmende Element im Sinne einer Regelung des Ist- auf den Sollwert einstellt.

Analog bildet die Steuereinheit 12 auf der Basis der über die Leitungen 32 bis 34 zugeführten Betriebsgrößen wie Motortemperatur, Last, Motordrehzahl, Fahrgeschwindigkeit, Batteriespannung, etc., und gegebenenfalls der über die Leitungen 52 und 64 zugeführten Stellungen von Bedienelement 50 und leistungsbestimmenden Element 62 ein Ausgangssignal zur Steuerung der zuzumessenden Kraftstoffmenge. Dieses Ausgangssignal wird über die Leitungen 28 an das Stellelement 30 übertragen.

Die obengenannten Betriebsgrößen sind teilweise identisch. Zur Erfassung derartiger Betriebsgrößen ist lediglich eine Meßeinrichtung notwendig. Die Meßwerte werden über das Bussystem 14 zwischen den Steuereinheiten ausgetauscht. Dasselbe gilt für die von den Sensoren 44 und 56 bzw. 46 und 58 erfaßten Stellungswerte.

Zu Überwachungszwecken werden in beiden Steuereinheiten jeweils die von den Sensoren 44 und 46 sowie 56 und 58 erfaßten Meßwerte miteinander auf einen vorgegebenen Toleranzbereich verglichen. Wird aufgrund der Plausibilitätsüberprüfungen z.B. ein Fehlerzustand im Bereich der Meßeinrichtung 40, die die Stellung des Bedienelements 50 erfaßt, festgestellt, so wird durch Überprüfung des Signalverlaufs oder bei Potentiometern durch Untersuchung der Übergangswiderstände der defekte Sensor ermittelt. Dabei ist insbesondere ein Sensor dann defekt, wenn die Änderung seines Signalwertes extrem schnell, d.h. normalerweise nicht möglich, ist. In diesem Fall wird zur Bildung des Sollwertes nur der noch funktionsfähige Sensor herangezogen. Dies stellt sicher, daß während eines Überholvorgangs die Leistung nicht plötzlich abfällt. Nach einer gewissen Zeit kann dann durch Begrenzung der Leistung, beispielsweise durch Begrenzung der Öffnung der Drosselklappe oder durch Begrenzen der maximalen Einspritzmenge, ein Notfahrbetrieb eingeleitet werden. Kann kein defekter Sensor ermittelt werden, so wird sofort eine Leistungsbegrenzung durchgeführt.

Wird ein Fehler im Bereich der Meßeinrichtung 42 erkannt, so wird sehr kurzzeitig die Drosselklappe im Rahmen einer vorgegebenen Prüfbewegung aktiv zu- und aufgefahren. Während dieser Zeit ist die Einspritzung durch die Steuereinheit 12 infolge eines entsprechenden Signals der Steuereinheit 10 über das Bussystem 14 an die Steuereinheit 12 infolge eines entsprechenden Signals der Steuereinheit 10 über das Bussystem 14 an die Steuereinheit 12 unterdrückt, so daß keine gefährlichen Beschleunigungssituationen auftreten können. Folgt ein Sensorsignal der Bewegung der Drosselklappe nicht, so wird der damit verbundene Sensor als fehlerhaft erkannt. Auch hier wird dann zur Berechnung des Ausgangsisgnals der Steuereinheit 10 auf den anderen, funktionsfähigen Sensor übergegangen.

Entstand der Fehlerzustand eines Sensors als Folge von Verschmutzung, ist es möglich, daß durch die Prüfbewegung der Drosselklappe der Fehlerzustand wieder aufgehoben ist. Die erfindungsgemäße Vorgehensweise ermöglicht dann ein normales Weiterfahren des Fahrzeugs.

Erkennt lediglich eine Steuereinheit mehrmals einen Fehlerzustand, so wird von einem Systemfehler ausgegangen und Notlauf durch Leistungsbegrenzung eingeleitet.

Ferner besteht die Möglichkeit eines Plausibilitätsvergleichs zwischen Fahrpedalstellung und Stellung des leistungsbestimmenden Elements. Wird von beiden Steuereinheiten ein Fehlerzustand dieser Art erkannt, so wird ebenfalls eine Leistungsbegrenzung eingeleitet.

Figur 2 stellt die erfindungsgemäße Vorgehensweise am Beispiel eines Flußdiagramms eines in der Steuereinheit 10 ablaufenden Programms dar. Ein vergleichbares Programm läuft in der Steuereinheit 12.

Nach Beginn des Programmteils wird in einem Schritt 100 die jeweiligen Meßwerte der Sensoren 46 (PWG2) und 58 (DKS2) eingelesen. Danach wird im Schritt 102 über das Bussystem 14 die von der Steuereinheit 12 erfaßten Meßwerte der Sensoren 44 (PWG1) und 56 (DKS1) eingelesen. Danach erfolgen im Schritt 104 die Plausibilitätsvergleiche auf vorgegebene Toleranzbereiche zwischen den Meßsignalwerten der Sensoren 44 und 46 (PWG1/2), 56 und 58 (DKS1/2) sowie 46 und 58 (PWG2/DKS2) bzw. 44 und 56 (PWG1/DKS1). Wird eine Unplausibilität zwischen den Meßwerten der Sensoren 44 und 46 erkannt, so wird die Fehlermarke FPWG gesetzt, bei Unplausibilität der Meßwerte der Sensoren 56 und 58 die Fehlermarke FDKS sowie bei Unplausibilität der Meßwerte der Sensoren 46 und 58 die Fehlermarke FSYS im Schritt 106 gesetzt. Danach werden im Schritt 108 die entsprechenden Überwachungsergebnisse der Steuereinheit 12 bzw. 10 eingelesen.

Im darauffolgenden Abfrageschritt 110 wird durch Vergleich der Fehlermarken überprüft, ob die Ergebnisse der beiden Steuereinheiten jeweils übereinstimmen. Ist dies nicht der Fall, so wird im Schritt 112 ein Fehlerzähler um 1 erhöht, dessen Stand im Schritt 114 abgefragt wird. Überschreitet der Fehlerzähler einen vorgegebenen Maximalwert, so wird gemäß Schritt 116 eine Leistungsbegrenzung durchgeführt und der Programmteil beendet. Im gegenteiligen Fall wird der Programmteil zu gegebener Zeit wiederholt.

Der Fehlerzähler stellt in vorteilhafter Weise sicher, daß die Leistungsreduzierung nur bei bleibendem Fehlerzustand eingeleitet wird.

Wird im Abfrageschritt 110 die Übereinstimmung der Überwachungsergebnisse erkannt, so wird im Schritt 118 der Fehlerzähler zu Null gesetzt und die Fehlermarke FPWG, die einen Fehler im Bereich des Bedienelements, der Meßeinrichtung 40 oder der Zuleitung repräsentiert, überprüft. Wurde ein Fehler erkannt, so schließt sich im Schritt 120 die Überprüfung des Signalverlaufs an oder im Falle von Potentiometern die Überprüfung des Übergangswiderstandes zwischen Schleifer und Schleiferbahn. Die Überprüfung des Potentiometers erfolgt dabei entsprechend dem eingangs genannten Stand der Technik der EP-A 289 766, während die Überprüfung des Signalverlaufs durch Vergleich des im gegenwärtigen Programmdurchlauf erfaßten Meßwertes (z.B. PWG1) mit einem in einem vorhergehenden Programmdurchlauf erfaßten (PWG1(t)) unter Berücksichtigung der inzwischen verstrichenen Zeit T erfolgt ( PWG1-PWG1(t)/T >Schwelle).

Im Abfrageschritt 122 wird festgestellt, ob die Prüfung gemäß Schritt 120 einen defekten Sensor ergeben hat. Ist dies nicht der Fall, so wird gemäß Schritt 124 ein Notlauf eingeleitet und der Programmteil zu gegebener Zeit wiederholt.

Im gegenteiligen Fall werden gemäß Schritt 126 die Steuerfunktionen der Steuereinheiten auf der Basis des nicht defekten Sensors ausgeführt.

In einem Ausführungsbeispiel ist ein Zähler vorgesehen. Nach Ablauf einer vorgegebenen Zeit (Schritt 128) nach der Fehlererkennung wird in diesem Ausführungsbeispiel gemäß Schritt 124 eine Leistungsbegrenzung eingeleitet. Dieser Zähler schließt einen gefährlichen Abbruch eines Überholvorgangs aus.

Wurde im Abfrageschritt 118 festgestellt, daß kein Fehler im Bereich der Meßeinrichtung 40 vorliegt, so wird im Abfrageschritt 130 überprüft, ob ein Fehler im Bereich der Meßeinrichtung 42 festgestellt wurde. Ist dies der Fall so wird im Schritt 132 die Kraftstoffzumessung abgeschaltet und das leistungsbestimmende Stellglied einer Prüfbewegung unterzogen. Dabei ist die Steuereinheit 10 derart ausgestaltet, daß diese Prüfbewegung in einem vorteilhaften Ausführungsbeispiel ein Ansteuern beider Endstellungen der leistungsbestimmenden Elements umfaßt. In anderen Ausführungsbeispielen kann ein bestimmter Bewegungsablauf, z.B. eine schwingende Bewegung mit vorgegebener Amplitude, oder ein einmaliges Auf- und Zufahren des Elements 18, vorgesehen sein. Die Prüfbewegung erfolgt dabei durch von der Steuereinheit 10 nach einem vorgegebenen Zeitplan erzeugten, über die Leitung 16 abgegebenen Ansteuersignale.

Im Abfrageschritt 134 wird anhand der Signalläufe der Meßsignale der fehlerhafte Sensor isoliert, wenn die Meßsignale dem Ansteuersignalverlauf nicht folgen. Kann anhand des Signalverlaufes kein fehlerhafter Sensor erkannt werden, so wird gemäß Schritt 136 eine Leistungsbegrenzung eingeleitet. Andernfalls wird analog zum Schritt 126 im Schritt 138 die Systemfunktionen abhängig vom nicht defekten Sensor durchgeführt. Im Schritt 140 wird der Stand eines mitlaufenden Zeitzählers überprüft, so daß nach Ablauf einer vorgegebenen Zeit eine Leistungsbegrenzung gemäß Schritt 136 eingeleitet wird, während bei nicht abgelaufener Zeit die Steuerfunktionen weiterhin abhängig vom nicht defekten Sensor durchgeführt werden.

Wurde im Abfrageschritt 130 kein Fehler im Bereich der Meßeinrichtung 42 erkannt, so wird gemäß Abfrageschritt 142 überprüft, ob eine Unplausibilität zwischen Fahrpedalstellung und der Stellung des leistungsbestimmenden Elements festgestellt wurde. Ist dies der Fall, wird gemäß Schritt 144 eine Leistungsbegrenzung eingeleitet und der Programmteil wiederholt. Wurde keine Unplausibilität festgestellt, ist gemäß Schritt 146 das System in fehlerfreiem Zustand. Danach wird der Programmteil wiederholt.

Die oben beschriebene Vorgehensweise wird vorteilhaft in beiden Steuereinheiten durchgeführt. Dadurch ergibt sich eine Redundanz der Systeme, ohne den Aufwand in einer Steuereinheit zu erhöhen. Bei erkanntem Fehler greift jede Steuereinheit in die ihr zugeordnete veränderliche Größe zur Leistungsbegrenzung bzw. -reduzierung ein.

In einem anderen Ausführungsbeispiel wird die oben beschriebene Vorgehensweise nur in einer Steuereinheit ausgeführt.

## Patentansprüche

1. Vorrichtung zur Steuerung der Antriebsleistung eines Fahrzeugs,
- mit einer ersten Steuereinheit (10) zur Steuerung der Motorleistung der Brennkraftmaschine durch Einstellen einer Drosselklappe,
- mit einer zweiten Steuereinheit (12) zur Steuerung der Kraftstoffzumessung und/oder der Zündung der Brennkraftmaschine,
- mit einer aus wenigstens zwei zueinander redundanten Sensoren (44, 46) bestehenden Meßeinrichtung (40) zur Erfassung der Stellung eines vom Fahrer betätigbaren Bedienelements und/oder der Drosselklappe, die entsprechende zueinander redundante Ausgangssignale erzeugen,
- mit einem Bussystem (14), über welches die beiden Steuereinheiten Daten und Informationen austauschen,
- wobei der ersten Steuereinheit das Ausgangssignal des ersten Sensors der Meßeinrichtung, der zweiten Steuereinheit das Ausgangssignal des anderen Sensors der Meßeinrichtung zugeführt ist,
- wobei die von den einzelnen Steuereinheiten eingelesenen Signalwerte über das Bussystem übermittelt und in den Steuereinheiten einem Plausibilitätsvergleich zur Fehlererkennung unterzogen werden.

2. Vorrichtung nach Anspruch 1, dadurch gekennzeichnet, daß die Vergleichsergebnisse zumindest in einer Steuereinheit miteinander verglichen werden.

3. Vorrichtung nach Anspruch 1 oder 2, dadurch gekennzeichnet, daß bei erkannten Abweichungen nach einer vorgegebener Zeit eine Leistungsbegrenzung beziehungsweise -reduzierung erfolgt.

4. Vorrichtung nach Anspruch 2 oder 3, dadurch gekennzeichnet, daß bei gleichen Vergleichsergebnissen bei erkanntem Fehler der Meßeinrichtung der defekte Sensor aus Messungen und/oder Plausibiltätsüberprüfungen des Signalverlaufes erkannt wird.

5. Vorrichtung nach Anspruch 4, dadurch gekennzeichnet, daß bei erkanntem, defekten Sensor die Steuerfunktionen auf der Basis des nicht defekten durchgeführt werden.

6. Vorrichtung nach Anspruch 4 oder 5, dadurch gekennzeichnet, daß eine Leistungsreduzierung erfolgt, wenn kein defekter Sensor ermittelt wurde oder nach Ablauf einer vorgegebenen Zeit nach Umschalten auf den nicht defekten.

7. Vorrichtung nach Anspruch 2, dadurch gekennzeichnet, daß der Vergleich nur in einer Steuereinheit stattfindet.

## Claims

1. Apparatus for controlling the output power of a vehicle,
- having a first control unit (10) for controlling the engine power of the internal combustion engine by adjusting a throttle valve,
- having a second control unit (12) for controlling the metering of fuel and/or the ignition of the internal combustion engine,
- having a measuring device (40), consisting of at least two sensors (44, 46) which are redundant with respect to one another, for detecting the position of a control element which can be activated by the driver and/or of the throttle valve, which sensors produce corresponding output signals which are redundant with respect to one another,
- having a bus system (14) by means of which the two control units exchange data and information,
- the output signal of the first sensor of the measuring device being fed to the first control unit and the output signal of the other sensor of the measuring device being fed to the second control unit,
- the signal values which are read in by the individual control units being transmitted via the bus system and being submitted in the control units to a plausibility comparison in order to detect errors.

2. Apparatus according to Claim 1, characterized in that the comparison results are compared with one another at least in one control unit.

3. Apparatus according to Claim 1 or 2, characterized in that when deviations are detected after a specific time a limitation or reduction in power takes place.

4. Apparatus according to Claim 2 or 3, characterized in that when comparison results are identical when a fault in the measuring device has been detected, the defective sensor is detected from measurements and/or plausibility tests of the signal profile.

5. Apparatus according to Claim 4, characterized in that when a defective sensor has been detected the control functions are carried out on the basis of the non-defective sensor.

6. Apparatus according to Claim 4 or 5, characterized in that a reduction in power takes place if no defective sensor has been identified or after a prescribed time has expired after switching over to the non-defective sensor.

7. Apparatus according to Claim 2, characterized in that the comparison takes place in only one control unit.

## Revendications

1. Dispositif pour commander la puissance motrice d'un véhicule, comprenant :
- une première unité de commande (10) pour commander la puissance motrice du moteur à combustion interne par réglage d'un volet d'étranglement,
- une seconde unité de commande (12) pour commander le dosage du carburant et/ou l'allumage du moteur à combustion interne,
- une installation de mesure (40) composée d'au moins deux capteurs redondant entre eux (44, 46), pour détecter la position d'un élément de manoeuvre actionné par le conducteur et/ou par le volet d'étranglement, et qui crée des signaux de sortie redondants,
- un système de bus (14) par lequel s'échangent les données et les informations des deux unités de commande,
- dispositif dans lequel
- la première unité de commande reçoit le signal de sortie du premier capteur de l'installation de mesure et la seconde unité de commande reçoit le signal de sortie de l'autre capteur de l'installation de mesure,
- les valeurs des signaux enregistrés par les différentes unités de commande étant transmises par le système de bus pour être soumises dans les unités de commande à une comparaison de plausibilité pour détecter les erreurs.

2. Dispositif selon la revendication 1, caractérisé en ce que les résultats de la comparaison sont comparés entre eux dans au moins une unité de commande.

3. Dispositif selon la revendication 1 ou 2, caractérisé en ce que lorsque des déviations sont détectées, après un temps prédéterminé, on limite ou on réduit la puissance.

4. Dispositif selon la revendication 2 ou 3, caractérisé en ce que pour les mêmes résultats de comparaison, lorsqu'un défaut est détecté dans l'installation de mesure, le capteur défectueux se décèle à partir des mesures et/ou des contrôles de plausibilité du tracé du signal.

5. Dispositif selon la revendication 4, caractérisé en ce que lorsqu'un détecteur défectueux est détecté, les fonctions de commande sont exécutées sur la base du détecteur non défectueux.

6. Dispositif selon les revendications 4 ou 5, caractérisé par une réduction de puissance lorsqu'aucun détecteur n'a été reconnu comme défectueux ou après la fin d'un temps prédéterminé après la commutation sur le capteur non défectueux.

7. Dispositif selon la revendication 2, caractérisé en ce que la comparaison ne se fait que dans une unité de commande.
